# EUROPEAN PATENT APPLICATION

(11) **EP 0 735 085 A1**
(43) Date of publication of application: **02.10.1996**
(21) Application number: 96104697.6
(22) Date of filing: 25.03.1996
(51) Int. Cl.: C08K 5/43, C08L 21/00

(54) **Silica reinforced rubber composition and tire with tread**

(30) Priority: 30.03.1995 US 413668
(71) Applicant: THE GOODYEAR TIRE & RUBBER COMPANY, Akron, Ohio 44316-0001 (US)
(72) Inventor: Sandstrom, Paul Harry, Tallmadge, Ohio 44278 (US); Sinsky, Mark Samuel, Akron, Ohio 44303 (US)
(74) Representative: Leitz, Paul

(57) **Abstract**

The present invention relates to a silica reinforced rubber composition and to pneumatic tires having treads comprised of the silica reinforced rubber compositions.

The silica reinforced rubber composition comprises at least one elastomer, silica, and a silica coupler comprised of dithiodicaprolactam and optionally, carbon black.

## Description

### Field

This invention relates to rubber compositions which are quantitatively reinforced with silica. In one aspect, the rubber composition is comprised of rubber, particularly sulfur cured rubber, reinforced with a combination of silica and specified coupling agent and, optionally, carbon black.

### Background

For various applications utilizing rubber which require high strength and abrasion resistance, particularly applications such as tires and various industrial products, sulfur cured rubber is utilized which contains substantial amounts of reinforcing fillers. Carbon black is commonly used for such purpose and normally provides or enhances good physical properties for the sulfur cured rubber. Particulate silica is also often used for such purpose, particularly when the silica is used in conjunction with a coupling agent. In some cases, a combination of silica and carbon black is utilized for reinforcing fillers for various rubber products, including treads for tires. The use of such reinforcing fillers for elastomers, including sulfur curable elastomers, is well known to those having skill in such art.

It is important to appreciate that, conventionally, carbon black is a considerably more effective reinforcing filler for rubber products, and particularly for rubber tire treads than silica if the silica is used without a coupling agent, or silica coupler as it may be sometimes referred to herein.

Indeed, at least as compared to carbon black, there tends to be a lack of, or at least an insufficient degree of, physical and/or chemical bonding between the silica particles and the rubber elastomers to enable the silica to become a sufficient reinforcing filler for the rubber for most purposes, including tire treads, if the silica is used without a coupling agent, or coupler or silica adhesion agent as it may sometimes be referred to herein.

In particular, such coupling agents may generally be composed of a silane which has a constituent component, or moiety, (the silane portion) capable of reacting with the silica surface and, also, a constituent component, or moiety, capable of interacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

The rubber-reactive group component of the coupler may be, for example, one or more of groups such as mercapto, amino, vinyl, epoxy, and sulfur groups, preferably a sulfur or mercapto moiety and more preferably sulfur.

Numerous coupling agents are taught for use in combining silica and rubber, such as, for example, silane coupling agents containing a polysulfide component, or structure such as, for example, trialkoxyorganosilane polysulfides containing from 2 to 8 sulfur atoms in a polysulfide bridge such as, for example, bis-(3-triethoxysilylpropyl)tetrasulfide and/or trisulfide.

Various U.S. patents relating to silicas and silica reinforced tire treads include US-A- 3 451 458; 3 664 403; 3 768 537; 3 884 285; 3 938 574; 4 482 663; 4 590 052; 5 089 554 and GB-A- 1 424 503.

The term "phr" if used herein, and according to conventional practice, refers to "parts of a respective material per 100 parts by weight of rubber, or elastomer".

In the description of this invention, the terms "rubber" and " elastomer" if used herein, may be used interchangeably, unless otherwise prescribed. The terms "rubber composition", "compounded rubber" and "rubber compound", if used herein, are used interchangeably to refer to rubber which has been blended or mixed with various ingredients and materials and such terms are well known to those having skill in the rubber mixing or rubber compounding art.

### Summary and Practice of the Invention

In accordance with this invention, a rubber composition is provided which comprises (A) 100 parts by weight of at least one diene-based elastomer, (B) 5 to 90, optionally 25 to 90, phr particulate, preferably precipitated, silica, (C) zero to 80, optionally up to about 30, phr carbon black, and (D) a silica coupler selected from (i) dithiodicaprolactam or (ii) a combination of 95 to 25, preferably 95 to 55, weight percent dithiodicaprolactam and, correspondingly, 5 to 75, preferably 5 to 45, weight percent of bis-(trialkoxysilylalkyl) polysulfide containing from 2 to 8 sulfur atoms in the polysulfide bridge such as, for example, wherein the weight ratio of said silica coupler to silica is in a range of 0.01/1 to 0.2/1; wherein the weight ratio of silica to carbon black, where said rubber composition contains carbon black, is at least 0.1/1, optionally at least 3/1 and, alternatively, at least 10/1; wherein the total of silica and carbon black, if said rubber composition contains carbon black, is in a range of 30 to 120, more preferably 45 to 90.

Thus, in one aspect of the invention, the rubber composition contains a combination of both silica and carbon black as elastomer reinforcing pigments.

Where the rubber composition contains both silica and carbon black reinforcing pigments and it may be desired that it be primarily reinforced with silica as the reinforcing pigment. In such case, it is preferable that the weight ratio of silica to carbon black is at least 1.1/1, preferably at least 3/1 and, alternatively, at least 10/1 and preferably in a range of 1.1/1 to 30/1.

In one aspect of the invention, the silica coupler consists essentially of the dithiodicaprolactam.

In a further aspect, the silica coupler can be composed of a combination of the dithiodicaprolactam and bis-(3-triethoxysilylpropyl)tetrasulfide.

In one aspect, such a rubber composition can be provided as being sulfur cured. The sulfur curing is accomplished in a conventional manner, namely by curing under conditions of elevated temperature and pressure for a suitable period of time.

Thus, a rubber tire is provided having a tread of the rubber composition of this invention.

In the practice of this invention, as hereinbefore pointed out, the rubber composition is comprised of at least one diene-based elastomer, or rubber. Such elastomers are typically selected from homopolymers and copolymers of conjugated dienes and copolymers of conjugated diene(s) and vinyl aromatic compound. Such dienes may, for example, be selected from isoprene and 1,3-butadiene and such vinyl aromatic compounds may be selected from styrene and alphamethylstyrene. Such elastomer, or rubber, may be selected, for example, from at least one of cis 1,4-polyisoprene rubber (natural and/or synthetic, and preferably natural rubber), 3,4-polyisoprene rubber, styrene/butadiene copolymer rubbers, isoprene/butadiene copolymer rubbers, styrene/isoprene copolymer rubbers, styrene/isoprene/butadiene terpolymer rubbers, cis 1,4-polybutadiene rubber, trans 1,4-polybutadiene rubber (70-95 percent trans), low vinyl polybutadiene rubber (10-30 percent vinyl), medium vinyl polybutadiene rubber (30-50 percent vinyl) and high vinyl polybutadiene rubber (50-75 percent vinyl).

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely a bound styrene content of 30 to 45 percent.

The relatively high styrene content of 30 to 45 for the E-SBR can be considered beneficial for a purpose of enhancing traction, or skid resistance, of the tire tread. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. Such are well known to those skilled in such art. The bound styrene content can vary, for example, from 5 to 50%. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile terpolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

A purpose of using S-SBR is for improved tire rolling resistance as a result of lower hysteresis when it is used in a tire tread composition.

The 3,4-polyisoprene rubber (3,4-PI) is considered beneficial for a purpose of enhancing the tire's traction when it is used in a tire tread composition.

The 3,4-PI and use thereof is more fully described in US-A- 5 087 668. The Tg refers to the glass transition temperature which can conveniently be determined by a differential scanning calorimeter at a heating rate of 10°C per minute.

The cis 1,4-polybutadiene rubber (BR) is considered to be beneficial for a purpose of enhancing the tire tread's wear, or treadwear.

Such BR can be prepared, for example, by organic solution polymerization of 1,3-butadiene.

The BR may be conveniently characterized, for example, by having at least a 90% cis 1,4-content.

The cis 1,4-polyisoprene and cis 1,4-polyisoprene natural rubber are well known to those having skill in the rubber art.

The vulcanized rubber composition should contain a sufficient amount of silica, and carbon black if used, reinforcing filler(s) to contribute a reasonably high modulus and high resistance to tear. The combined weight of the silica and carbon black, as hereinbefore referenced, may be as low as about 30 parts per 100 parts rubber, but is preferably from 45 to 90 parts by weight.

The commonly employed siliceous pigments used in rubber compounding applications can be used as the silica in this invention, including pyrogenic and precipitated siliceous pigments (silica), although precipitated silicas are preferred.

The siliceous pigments preferably employed in this invention are precipitated silicas such as, for example, those obtained by the acidification of a soluble silicate, e.g., sodium silicate.

Such silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, page 304 (1930).

The silica may also be typically characterized by having a dibutylphthalate (DBP) absorption value in a range of 100 to 400, and more usually 150 to 300.

The silica might be expected to have an average ultimate particle size, for example, in the range of 0.01 to 0.05 micron as determined by the electron microscope, although the silica particles may be even smaller, or possibly larger, in size.

Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, designations of Zeosil 1165MP and silicas available from Degussa AG with, for example, designations VN2 and VN3, etc.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of reinforcing type carbon blacks(s), for this invention, if used, are hereinbefore set forth. It is to be appreciated that the silica coupler may be used in conjunction with a carbon black, namely, pre-mixed with a carbon black prior to addition to the rubber composition, and such carbon black is to be included in the aforesaid amount of carbon black for the rubber composition formulation. Typical amounts of tackifier resins, if used, comprise 0.5 to 10 phr, usually 1 to 5 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to about 8 phr, with a range of from 1.5 to 2.5, sometimes from 2 to 2.5, being preferred.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4, preferably 0.8 to 1.5, phr. In another embodiment, combinations of a primary and a secondary accelerator might be used with the secondary accelerator being used in smaller amounts (of 0.05 to 3 phr) in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the use of silica as a reinforcing filler in combination with dithiodicaprolactam as a coupling agent.

The presence and relative amounts of the above additives are not considered to be an aspect of the present invention which is more primarily directed to the utilization of specified blends of rubbers in rubber compositions, in combination with silica and dithiodicaprolactam or, for example, blends of dithiodicaprolactam and bis-(3-triethoxysilylpropyl) tetrasulfide as well as, optionally, carbon black, for the reinforcement of the rubber.

The mixing of the rubber composition can be accomplished by methods known to those having skill in the rubber mixing art. For example, the ingredients are typically mixed in at least two stages, namely, at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s). The rubber, silica and silica coupler, and carbon black if used, are mixed in one or more non-productive mix stages. The terms "non-productive" and "productive" mix stages are well known to those having skill in the rubber mixing art.

The rubber composition of this invention can be used for various purposes. For example, it can be used for various tire compounds. Such tires can be built, shaped, molded and cured by various methods which are known and will be readily apparent to those having skill in such art.

The invention may be better understood by reference to the following examples in which the parts and percentages are by weight unless otherwise indicated.

### EXAMPLE I

In this example, dithiodicaprolactam, was evaluated as an alternative for a relatively commonly used silica coupling agent, bis-(3-triethoxysilylpropyl)tetrasulfide, in a silica reinforced rubber composition. Rubber compositions containing the materials set out in Table 1 were prepared in a BR Banbury internal mixer using three separate stages of addition (mixing), namely, two non-productive mix stages and one productive mix stage to temperatures of 160°C, 160°C and 120°C and times of 4 minutes, 4 minutes and 2 minutes, respectively. The amount of coupler is listed as being "variable" in Table 1 and is more specifically set forth in Table 2.

It is clearly evident that a coupling agent, or other modifier, is required to obtain suitable cured properties in a silica containing rubber compound. Such properties include tensile strength at break, the 100 and 300% modulus values, rebound, hardness, Rheovibron E' and particularly DIN abrasion resistance (lower values better for abrasion). Samples 2 and 3, when compared to Sample 1, which was prepared in the absence of coupling agent, clearly show the advantage of the coupling agents. The properties of Sample 3, which contains the material of this invention are better than those of Sample 2 which contains the conventional silane coupling agent.

**Table 1**

| 1st Non-Productive | |
|---|---|
| NAT 2200¹ | 100.00 |
| Carbon Black | 35.00 |
| Processing Oil | 5.00 |
| Zinc Oxide | 5.00 |
| Fatty Acid | 2.00 |
| Antioxidant² | 2.00 |

| 2nd Non-Productive | |
|---|---|
| Silica³ | 15.00 |
| Bis-(3-triethoxylsilylpropyl) tetrasulfide⁴ | variable |
| Dithiodicaprolactam⁵ | variable |

| Productive | |
|---|---|
| Sulfur | 1.40 |
| Accelerator, sulfenamide type | 1.00 |

| | |
|---|---|
| 1) synthetic cis 1,4-polyisoprene from The Goodyear Tire & Rubber Company; | |
| 2) of the polymerized 1,2-dihydro-2,2,4-trimethyldihydroquinoline type; | |
| 3) Hi-Sil-210 from PPG Industries, Inc.; | |
| 4) a composite commercially available from Degussa as X50S in a form of a 50/50 blend of bis-(3-triethoxysilylpropyl) tetrasulfide (said tetrasulfide also available as Si69 from Degussa) with carbon black and, thus, the tetrasulfide is considered as being 50% of the composite. Technically, the tetrasulfide is understood to be an organosilane polysulfide as a composite, or mixture, in which the averagel polysulfide bridge contains 3.5 to 4 connecting sulfur atoms, although the mixture may contain such polysulfides with 2 to 8 connecting sulfur atoms. | |
| 5) Rhenocure S/G from Rhein Chemie Corporation. | |

**Table 2**

| Sample # | 1 | 2 | 3 |
|---|---|---|---|
| X50S (50% active) | 0 | 3 | 0 |
| Dithiodicaprolactam (80% active) | 0 | 0 | 1.5 |

| Rheometer (150°C) | | | |
|---|---|---|---|
| Max. Torque | 29.2 | 34.7 | 45.0 |
| Min. Torque | 5.2 | 4.3 | 5.0 |
| Delta Torque | 24.0 | 30.4 | 40.0 |
| T₉₀, minutes | 24.8 | 22.3 | 21.0 |

| Stress-Strain | | | |
|---|---|---|---|
| Tensile Strength, MPa | 15.8 | 19.0 | 21.2 |
| Elongation at Break, % | 662 | 607 | 530 |
| 100% Modulus, MPa | 1.0 | 1.6 | 2.5 |
| 300% Modulus, MPa | 4.4 | 7.7 | 10.6 |

| Rebound | | | |
|---|---|---|---|
| 100°C, % | 53.8 | 58.2 | 63.6 |

| Hardness | | | |
|---|---|---|---|
| Shore A, 100°C | 44.1 | 52.5 | 61.1 |

| Rheovibron | | | |
|---|---|---|---|
| E' at 60°C, MPa | 8.8 | 13.1 | 17.6 |
| Tan. Delta at 60°C | .126 | .102 | .063 |
| DIN Abrasion | 308 | 169 | 158 |

In particular, this Example shows that the dithiodicaprolactam, as utilized in Sample #3, can provide significant improvements in modulus, rebound, hardness and abrasion when compared to control Sample #1 which does not contain coupling agent. Furthermore, these properties are better than those of Sample #2 which contains the more conventional silane coupling agent.

### EXAMPLE II

In this example, the dithiodicaprolactam was evaluated as a partial or total replacement for the bis-(3-triethoxysilylpropyl)tetrasulfide in a silica loaded rubber composition. Rubber compositions containing the materials set out in Table 3 were prepared in a BR Banbury mixer using three separate stages of addition (mixing), namely, two non-productive mix stages and a productive mix stage to temperatures of 160°C, 160°C and 120°C and times of approximately 4 minutes, 4 minutes and 2 minutes, respectively. The variations in the recipes are indicated in Table 4 along with the cure behavior and cured properties.

Again, it is evident that a coupling agent is required in a silica containing rubber compound to achieve optimum cured properties. The dithiodicaprolactam alone gave some improvements in properties (Sample #6), whereas the combination of dithiodicaprolactam and Si69 (Sample #7) gave properties somewhat similar to those of Sample #5 which contained only the Si69 coupling agent.

**Table 3**

| 1st Non-Productive | |
|---|---|
| NAT 2200¹ | 100.00 |
| Carbon Black | 35.00 |
| Processing Oil | 5.00 |
| Zinc Oxide | 5.00 |
| Fatty Acid | 2.00 |
| Antioxidant² | 2.00 |

| 2nd Non-Productive | |
|---|---|
| Silica³ | 15.00 |
| Bis-(3-triethoxylsilylpropyl) tetrasulfide⁴ | variable |
| Dithiodicaprolactam | variable |

| Productive | |
|---|---|
| Sulfur | 1.40 |
| Accelerators, sulfenamide type | 1.00 |

| | |
|---|---|
| 1. synthetic cis 1,4-polyisoprene from The Goodyear Tire & Rubber Company; | |
| 2. polymerized 1,2-dihydro-2,2,4-trimethylquinoline type; | |
| 3. Hi-Sil-210 from PPG Industries, Inc.; and | |
| 4. a composite commercially available from Degussa as X50S in a form of a 50/50 blend of bis-(3-triethoxysilylpropyl) tetrasulfide (said tetrasulfide also available as Si69 from Degussa) with carbon black and, thus, the tetrasulfide is considered as being 50% of the composite. | |

**Table 4**

| Sample # | 4 | 5 | 6 | 7 |
|---|---|---|---|---|
| X50S (50% active) | 0 | 3 | 0 | 1 |
| Dithiodicaprolactam (80% active) | 0 | 0 | 1 | 0.5 |

| Rheometer (150°C) | | | | |
|---|---|---|---|---|
| Max Torque | 28.8 | 32.0 | 33.0 | 34.0 |
| Min Torque | 8.0 | 7.0 | 7.4 | 8.5 |
| Delta Torque | 20.8 | 25.0 | 25.6 | 25.5 |
| T₉₀, minutes | 21.0 | 18.8 | 17.0 | 17.3 |

| Stress-Strain | | | | |
|---|---|---|---|---|
| Tensile Strength, MPa | 17.2 | 20.6 | 20.3 | 20.3 |
| Elongation at Break, % | 655 | 615 | 639 | 605 |
| 100% Modulus, MPa | 1.12 | 1.68 | 1.40 | 1.65 |
| 300% Modulus, MPa | 4.91 | 8.11 | 6.55 | 7.90 |

| Rebound | | | | |
|---|---|---|---|---|
| 100°C, % | 56.7 | 61.1 | 61.1 | 62.8 |

| Hardness | | | | |
|---|---|---|---|---|
| Shore A, 100°C | 45.6 | 53.0 | 49.8 | 52.8 |

| Rheovibron | | | | |
|---|---|---|---|---|
| E' at 60°C, MPa | 8.9 | 10.7 | 10.3 | 10.1 |
| Tan. Delta at 60°C | .109 | .096 | .089 | .094 |
| DIN Abrasion | 252 | 136 | 191 | 139 |

### EXAMPLE III

In this example, the dithiodicaprolactam was evaluated as a coupling agent in a silica loaded rubber composition. Rubber compositions containing the materials set out in Table 5 were prepared in a BR Banbury mixer using three separate stages of addition (mixing), namely, two non-productive mix stages and a productive mix stage to temperatures of 160°C, 160°C and 120°C and times of approximately 4 minutes, 4 minutes and 2 minutes, respectively. The variations in the recipes are indicated in Table 6 along with the cure behavior and cure properties.

Again, it is evident that a coupling agent is required in a silica containing rubber compound to achieve optimum cured properties.

**Table 5**

| 1st Non-Productive | |
|---|---|
| NAT 2200 | 100.00 |
| Carbon Black | 15.00 |
| Silica | 20.00 |
| Processing Oil | 5.00 |
| Zinc Oxide | 3.00 |
| Fatty Acid | 3.00 |
| Antioxidant | 2.00 |
| Dithiodicaprolactam | 0 or 1 |

| 2nd Non-Productive | |
|---|---|
| Silica | 15 |
| Dithiodicaprolactam | 0 or 1 |

| Productive | |
|---|---|
| Sulfur | 2.00 |
| Accelerator, Sulfenamide type | 3.00 |
| Diphenylguanidine | 1.00 |

**Table 6**

| Sample # | 8 | 9 |
|---|---|---|
| Dithiodicaprolactam | 0 | 2 |

| Rheometer (150°C) | | |
|---|---|---|
| Max. Torque | 38 | 44.7 |
| Min. Torque | 10.5 | 3.3 |
| Delta Torque | 27.5 | 41.4 |
| T₉₀, minutes | 20.3 | 14.3 |

| Stress-Strain | | |
|---|---|---|
| Tensile Strength, MPa | 20.0 | 13.2 |
| Elongation at Break, % | 689 | 387 |
| 100% Modulus, MPa | 1.16 | 2.32 |
| 300% Modulus, MPa | 4.36 | 9.69 |

| Rebound | | |
|---|---|---|
| 100°C % | 66.9 | 65.3 |

| Hardness | | |
|---|---|---|
| Shore A, 100°C | 49.5 | 61.9 |

| Rheovibron | | |
|---|---|---|
| E' at 60°C, MPa | 9.3 | 19.9 |
| Tan. Delta at 60°C | .066 | .049 |
| DIN Abrasion | 190 | 146 |

### EXAMPLE IV

In this example, the dithiodicaprolactam was evaluated as a partial replacement for the bis-(3-triethoxysilylpropyl)tetrasulfide in a highly silica loaded rubber composition. Rubber composition containing the materials set out in Table 7 was prepared in a BR Banbury mixer using three separate stages of addition, namely, two non-productive mix stages and one productive mix stage to temperatures of 160°C, 160°C and 120°C and times of 4 minutes, 4 minutes and 2 minutes, respectively. The cure behavior and cured properties are indicated in Table 8.

The combination of dithiodicaprolactam and the conventional coupling agent gave a rubber composition exhibiting excellent cured properties in the presence of high levels of silica filler.

**Table 7**

| 1st Non-Productive | |
|---|---|
| SBR 1712¹ | 68.75 |
| BUD 1207² | 15.00 |
| NAT 2200 | 35.00 |
| Carbon Black | 20.00 |
| Silica³ | 40.00 |
| Zinc Oxide | 3.00 |
| Fatty Acid | 3.00 |
| Antioxidant⁴ | 2.00 |
| Processing Aid⁵ | 5.00 |
| Bis-(3-triethoxylsilylpropyl)⁶ tetrasulfide (50% active) | 3.00 |

| 2nd Non-Productive | |
|---|---|
| Silica | 30 |
| Bis-(3-triethoxylsilylpropyl) tetrasulfide (50% active) | 2.00 |
| Dithiodicaprolactam | 1.00 |

| Productive | |
|---|---|
| Sulfur | 1.4 |
| Accelerator, Sulfenamide Type | 1.8 |
| Diphenylguanidine | 1.5 |

| | |
|---|---|
| 1) Emulsion styrene/butadiene copolymer elastomer containing 23.5 % bound styrene and 37.5 phr aromatic oil from The Goodyear Tire & Rubber Company; | |
| 2) high cis 1,4-polybutadiene from The Goodyear Tire & Rubber Company; | |
| 3) Rhone-Poulenc Zeosil 1165 MP; | |
| 4) polymerized 1,2-dihydro-2,2,4-trimethylquinoline type; and | |
| 5) Struktol A6. | |
| 6) X50S, from Degussa; | |

**Table 8**

| Sample # | 10 |
|---|---|
| | |

| Rheometer, 150°C | |
|---|---|
| Max Torque | 50.7 |
| Min Torque | 13.5 |
| Delta Torque | 37.2 |
| T₉₀, minutes | 16.0 |

| Stress-Strain | |
|---|---|
| Tensile Strength, MPa | 15.4 |
| Elongation at Break, % | 413 |
| 100% Modulus, MPa | 2.91 |
| 300% Modulus, MPa | 11.21 |

| Rebound | |
|---|---|
| 100°C, % | 55.1 |

| Hardness | |
|---|---|
| Shore A, 100°C | 67.5 |

| Rheovibron | |
|---|---|
| E' at 60°C | 31.5 |
| Tan. Delta at 60°C | .088 |
| | |
| DIN Abrasion | 144 |

While certain representative embodiments and details have been shown for the purpose of illustrating the invention, it will be apparent to those skilled in this art that various changes and modifications may be made therein without departing from the scope of the claims.

## Claims

1. A rubber composition characterized by being comprised of (A) 100 parts by weight of at least one diene-based elastomer, (B) 5 to 90 phr particulate silica, (C) zero to 80 phr carbon black, and (D) a silica coupler selected from (i) dithiodicaprolactam or from (ii) a combination of 95 to 25 weight percent dithiodicaprolactam and, correspondingly, 5 to 75 weight percent of bis-(trialkoxysilylalkyl) polysulfide containing from 2 to 8 sulfur atoms in the polysulfidic bridge; wherein the weight ratio of said silica coupler to silica is in a range of 0.01/1 to 0.2/1; wherein the weight ratio of silica to carbon black, where the rubber composition contains carbon black, is at least about 0.1/1 and wherein the total of silica and carbon black, where the rubber composition contains carbon black, is in a range of 30 to 120.

2. The rubber composition of claim 1 characterized in that the silica coupler consists essentially of dithiodicaprolactam.

3. The rubber composition of claim 1 characterized in that the silica coupler is a combination of 95 to 25 weight percent dithiodicaprolactam and, correspondingly, 5 to 75 weight percent bis-(3-triethoxysilylpropyl)tetrasulfide.

4. The rubber composition of any of preceding claims characterized in that the diene based elastomer is selected from at least one of cis 1,4-polyisoprene rubber, 3,4-polyisoprene rubber, styrene/butadiene copolymer rubbers, isoprene/butadiene copolymer rubbers, styrene/isoprene copolymer rubbers, styrene/isoprene/butadiene terpolymer rubbers, cis 1,4-polybutadiene rubber, trans 1,4-polybutadiene rubber (70-95 percent trans), low vinyl polybutadiene rubber (10-30 percent vinyl), medium vinyl polybutadiene rubber (30-50 percent vinyl), high vinyl polybutadiene rubber (50-75 percent vinyl) and emulsion polymerization prepared styrene/butadiene/acrylonitrile terpolymer rubber and butadiene/acrylonitrile copolymer rubber.

5. The rubber composition of any of the preceding claims characterized in that the silica has a BET surface area in a range of 50 to 300 square meters per gram and a dibutylphthalate (DBP) absorption value in a range of 150 to 300.

6. A rubber composition characterized by being comprised of (A) 100 parts by weight of at least one diene-based elastomer, (B) 25 to 90 phr particulate silica, (C) up to about 30 phr carbon black, and (D) a silica coupler is collectively composed of 95 to 55 weight percent dithiodicaprolactam and 5 to 45 weight percent bis-(3-triethoxysilylpropyl) tetrasulfide wherein the weight ratio of said silica coupler to silica is in a range of 0.01/1 to 0.2/1; wherein the weight ratio of silica to carbon black is in a range of 3/1 to 30/1; wherein the total of silica and carbon black is in a range of 30 to 120; wherein the silica has a BET surface area in a range of 50 to 300 square meters per gram and a dibutylphthalate (DBP) absorption value in a range of 150 to 300.

7. A rubber tire characterized by having a tread of the rubber composition of any of the preceding claims.
